Europäisches Patentamt

European Patent Office

Office européen des brevets

(11) Publication number: 0 227 316
A1

(12) **EUROPEAN PATENT APPLICATION**

(21) Application number: 86309221.9

(22) Date of filing: 26.11.86

(51) Int. Cl.⁴: **F 17 D 1/20**
**F 17 D 3/00, F 16 L 55/04**

(30) Priority: 29.11.85 GB 8529443

(43) Date of publication of application:
01.07.87 Bulletin 87/27

(84) Designated Contracting States:
AT DE FR SE

(71) Applicant: Coal Industry (Patents) Limited
Hobart House Grosvenor Place
London SW1X 7AE(GB)

(72) Inventor: Robertson, Andrew John
23 Hillview Lane
Tewkesbury Gloucestershire(GB)

(74) Representative: Wood, John Irwin
Hobart House Grosvenor Place
London SW1X 7AE(GB)

(54) **Dampers.**

(57) A damper for a circular section duct (2) includes a circular blade (4) with segments (12,14) at diametrically opposed locations bent over along the chordal lines in opposite senses to give asymmetry. A counterbalance arm (8) is fixed externally of the duct (2) to the blade spindle (6) and carries a weight (10).

## DAMPERS

This invention relates to dampers of the kind installed in ducts to control the flow of fluid therethrough.

In particular, although not exclusively, the invention has reference to such dampers employed to control the flow of a gas, e.g. air, when used for example in pneumatic delivery systems.

An object of the invention is to provide an improved damper of simple construction for use in a constant velocity mode.

According to the invention there is provided a damper for use in a constant velocity mode within a duct, the damper including an asymmetric circular blade pivotally mountable within a circular duct and having diametrically opposed formations provided to give asymmetry, and a counterbalance arm mountable externally of the duct and movable in unison with the blade.

For example, a segment of the circular blade is bent over along the chordal line in an opposite sense at each diametral location thereby providing asymmetry.

The counterbalance arm has its centre line in the same plane as the blade and has a counterweight appropriately positioned along its length to yield the requisite control.

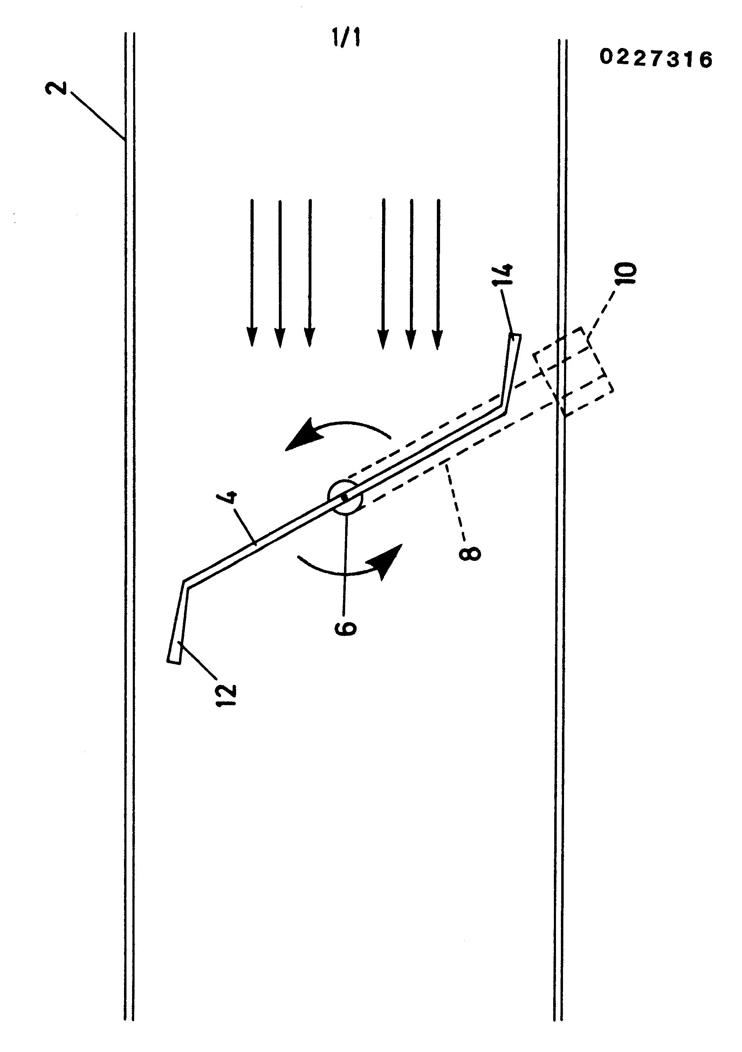

By way of example only, one embodiment of damper according to the invention is described below with reference to the accompanying drawing which shows a longitudianl cross-section through a duct incorporating the damper.

Referring to the drawing a circular section duct 2 has pivotally mounted therein a circular damper blade 4 carried on a spindle 6 which passes through the duct along a diameter thereof to terminate externally thereof. The spindle 6 has affixed thereto at its end outside the duct 2 a counterbalance arm 8 the centre line of which lies in the same plane as that of the blade 4, and a weight 10 is carried at the end of the arm 8.

The blade 4 is asymmetric about the spindle 6 and has at diametral locations, in the example at the top and the bottom, segments 12,14 respectively which are bent over along chordal lines in opposite directions.

In operation, air flow, shown by the arrows, across the damper blade 4 tries to open the damper blade 4 against the counter balance weight 10 which creates a greater moment as the damper opening is increased, thus giving a dynamic balance point for various settings of the counterbalance weight to give a desired constant velocity.

0227316

CLAIMS

1. A damper for use in a constant velocity mode within a duct (2), characterised in that the damper includes an asymmetric circular blade (4) pivotally mountable (6) within a circular section duct (2) and having diametrically opposed formations (12, 14) provided to give asymmetry, and a counter balance arm (8) mountable externally of the duct (2) and movable in unison with the blade (4).

2. A damper according to Claim 1 characterised in that each formation (12, 14) is constituted by a bent over segment, the segments being bent along chordal lines in opposite senses at each diametral location.

3. A damper according to claim 1 or 2 characterised in that the counter balance arm (8) has its centre line in the same plane as the blade (4) and has a counterweight (10) positioned along its length.

2

12

4

6

8

14

10

European Patent
Office

**EUROPEAN SEARCH REPORT**

| DOCUMENTS CONSIDERED TO BE RELEVANT | | | | EP 86309221.9 |
|---|---|---|---|---|

| Category | Citation of document with indication, where appropriate, of relevant passages | | Relevant to claim | CLASSIFICATION OF THE APPLICATION (Int. Cl 4) |
|---|---|---|---|---|
| A | DE - A - 1 500 001 (DEUTSCHE ERDOL AG) | | | F 17 D 1/20 |
| | | | | F 17 D 3/00 |
| | ---- | | | F 16 L 55/04 |
| | | | | |
| | | | | **TECHNICAL FIELDS SEARCHED (Int. Cl 4)** |
| | | | | F 17 D 1/00 |
| | | | | F 17 D 3/00 |
| | | | | F 16 L 55/00 |
| | The present search report has been drawn up for all claims | | | |

| Place of search | Date of completion of the search | Examiner |
|---|---|---|
| VIENNA | 03-02-1987 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82